# EUROPEAN PATENT SPECIFICATION

(11) **EP 0 947 608 B1**
(45) Date of publication and mention of the grant of the patent: **02.07.2003**
(21) Application number: 99103789.6
(22) Date of filing: 26.02.1999
(51) Int. Cl.: C23F 11/04, E21B 43/27, E21B 41/02

(54) **Environmentally benign acid corrosion inhibitor**
Umweltfreundlicher Korrosionsinhibitor für Säuren
Inhibiteur de la corrosion acide écocompatible

(30) Priority: 24.03.1998 US 47208
(43) Date of publication of application: 06.10.1999
(73) Proprietor: Clearwater International, L.L.C, Houston, Texas 77027 (US)
(72) Inventor: Scherubel, Gary A., St. Louis, MO 63132 (US); Fauke, Allen R., St. Louis, MO 63144 (US); Reid, Robert, Alton, IL 62002 (US); Schwartz, Kevin, St. Louis, MO 63123 (US)
(74) Representative: Harding, Richard Patrick

(56) References cited:
- EP-A- 0 289 665
- EP-A- 0 593 230
- EP-A- 0 869 258
- US-A- 3 077 454
- US-A- 3 514 410
- US-A- 5 013 483
- US-A- 5 120 471
- US-A- 5 366 643

## Description

This invention relates to environmentally improved compositions and methods for inhibiting the corrosion of piping, pumps and other metal articles which could otherwise occur from contact with highly acidic solutions used in acidizing oil wells and the like.

It is well known to "acidize" hydrocarbon-containing underground formations. When acidizing is performed, the formation may already be fractured or may become fractured under pressure from the acidizing solution itself. In either case, a highly acid solution is forced into the fractures and fissures to etch or otherwise enlarge them, generally increasing permeability and tending to form channels. The channels thus formed can remain to transport the desired hydrocarbons from the formation even after the fissures tend to close due to the natural weight and settling of the formation.

The acidizing solutions typically contain, for example, 15% hydrochloric acid, and accordingly present a harsh environment for the pumps, pipes, well casings, and other metal parts which contact them. The art has long sought additives for the acidizing solutions which not only will be effective at inhibiting corrosion but also will not increase the environmental risks of the process.

Many prior art compositions contain amines, quaternaries, acetylenic alcohols, and/or phenol ethoxylate surfactants, all of which have been seen as environmentally objectionable. We therefore have striven to design a corrosion inhibitor which is free of such materials.

In US Patent 3,077,455, Monroe describes an early "reaction product" inhibitor made from, for example, thioruea, acetophenone, and formaldehyde in the presence of HCl and tall oil. Aldehydes are suggested by Engle and Keeney for acid corrosion inhibiting in US Patent 3,514,410.

Ethylene glycol and methanol are used together with an antisludging agent by Ford, as described in US Patent 4,823,874, for acidizing treatments.

Cinnamaldehyde is combined with a quaternary salt of a nitrogen-containing heterocyclic aromatic compound, in US Patent 5,120,471 to Jasinski et al. Such a quaternary salt is environmentally undesirable. Jasinski et al recite a list of derivatives and variations of cinnamaldehyde which appear to be useful in the context of their invention.

Frenier et al, in US Patent 5,013,483, in Example 1, prepares 2-benzoyl-1,3-dimethoxy propane by reacting acetophenone and formaldehyde in the presence of hydrochloric acid. The product is used as a comparative for corrosion testing of 2-benzoyl-3-methoxy-1-propene, which is a subject of the '483 invention; the saturated product performs less well than the propene derivative, in the context of the tests.

Thiourea, acetophenone, formaldehyde and hydrochloric acid are included by Walker, in US Patent 5,366,643, in a reaction with a fatty acid designed to make a reaction product to be used, with antimony, as a component of a corrosion inhibitor for acidizing solutions. Column 8, line 63 to column 9 line 5; however, the reaction product is effective by itself as a corrosion inhibitor - column 3, lines 50-57.

EP-A-289,665 discloses a composition for inhibiting the attack of aqueous corrosive fluids on ferrous metals which comprises an α,β-unsaturated aldehyde such as cinnamaldehyde and a surfactant which may be a nonionic surfactant. Preferably, the surfactant is a reaction product of trimethyl-1-heptanol with ethylene oxide.

Example 2 of EP-A-593,230 discloses a metal corrosion-inhibiting composition obtained by effecting a condensation reaction of acetophenone, cinnamaldehyde, formaldehyde and thiourea in the presence of hydrochloric acid under reflux conditions, and combining the obtained reaction product with a dispersing agent comprised of nonylphenol ethoxylated with ethylene oxide.

Example 1 of US Patent 3,077,454 discloses a composition for inhibiting corrosion obtained by effecting a condensation reaction of thiourea, acetophenone, formaldehyde and a refined tall oil fatty acid in the presence of hydrochloric acid under reflux conditions, and combining the obtained reaction product with tall oil, nonylphenol condensed with ethylene oxide, and propargyl alcohol.

While some of the compositions of the prior art have achieved a degree of effectiveness against corrosion, they are environmentally questionable. The art is still in need of an effective corrosion inhibitor for acidizing solutions which is also environmentally benign.

We have invented a new composition and method for inhibiting the corrosion which otherwise would be caused by acid solutions in acidizing wells. The composition and method employ no quaternary amines, no acetylenic alcohol, no formaldehyde, and no phenol ethoxylate surfactants, all of which are common ingredients in prior art acidizing corrosion inhibitors.

The present invention provides a composition useful for inhibiting corrosion of ferrous metals by acidic solutions comprising, by weight, (a) 10% to 30% cinnamaldehyde or substituted cinnamaldehyde, (b) 20% to 50% ethylene glycol, (c) 5% to 20% C₈₋₁₂ ethoxylated alcohols, and (d) 1% to 15% of a composition comprising 10% to 40% isopropanol and a reaction product, based on the total composition in this section (d), of 10% to 40% of a ketone having 3 to 9 carbon atoms, 1% to 10% urea, thiourea or an alkyl-substituted thiourea, 25% to 50% benzaldehyde or formaldehyde calculated as a 37% solution, and 1% to 10% HCl calculated as a 37% solution, said reaction being conducted in the presence of 5% to 20% ethylene glycol, propylene glycol or butanol and by warming the reactants in a vessel equipped with a reflux condenser, at a temperature slightly below that at which formaldehyde or benzaldehyde would collect in the condenser, and then refluxing the reaction mixture for at least six hours, with the proviso that the composition does not contain quaternary amines, acetylenic alcohols, formaldehyde and phenol ethoxylate surfactants.

The present invention further relates to a composition useful for acidizing wells comprising hydrochloric acid and 0.1% to 5% by weight of the composition as defined above, and to a method of acidizing a well comprising treating said well with said composition.

Preferred embodiments of the present invention are set forth in the claims.

Our preferred composition has two basic components -- (1) a reaction product of acetophenone, thiourea, formaldehyde, and hydrochloric acid, the reaction being conducted in the presence of ethylene glycol and the reaction product being carried in isopropanol as a solvent (2) additives comprising cinnamaldehyde, ethylene glycol, and Neodol 91.8. The preparation of the composition is explained in some detail below. Our method includes incorporating a small amount of our composition into the acidizing solution and acidizing a formation with the acidizing solution.

In particular, our invention includes the following preferred composition, within the ranges of percentages by weight indicated below:

| **Preferred Composition** | | |
|---|---|---|
| Preferred | Material | Range |
| 15% by weight | Cinnamaldehyde | 10 to 30% |
| 15% | NEODOL 91.8* | 5 to 20% |
| 40% | Ethylene Glycol | 25 to 50% |
| 15% | Formic Acid | 10 to 30% |
| 10% | Water | 5 to 25% |
| 5% | Composition A** | 1 to 15% |

| | | |
|---|---|---|
| *NEODOL 91.8 is a trademark of Shell Chemical Company; the composition is a mixture of C₉ to C₁₁ alcohols having an average molecular weight of 160. The alcohols include an average of 8.3 moles of ethylene oxide. | | |
| **Composition A is made according to the recipe described below. | | |

**Preparation of Composition A** -- a specific recipe

| Ingredients: | | | |
|---|---|---|---|
| acetophenone | 21.06% by weight | thiourea | 4.32% |
| 37% formaldehyde | 36.04% | ethylene glycol | 9.28% |
| 37% HCl | 4.84% | isopropanol | 24.45% |

To a reactor equipped with stirrer, thermometer, reflux condenser, and heater was charged the thiourea, followed by the formaldehyde solution. When the thiourea had dissolved, the acetophenone and ethylene glycol were added, followed by the hydrochloric acid. The rapidly stirred emulsion was warmed to 90°C and held at that temperature for 2 hours to prevent collection of the formaldehyde in the condenser. Then the reaction mixture was refluxed at 95°C and after 6 hours became clear. The solution became cloudy again after a few hours. After a total of 12 hours of reflux, the cloudy solution was clarified by the addition of the isopropanol. On standing several days at room temperature some solid precipitated, but could be redissolved by warming.

The above recipe need not be followed precisely. The ingredients may be used in the following ranges: acetophenone 10% to 40%; thiourea 1% to 10%; formaldehyde in 37% solution 25% to 50%, although the equivalent amount of formaldehyde may be used in the form of paraformaldehyde; ethylene glycol 5% to 20% -- note that propylene glycol or butanol may be substituted; 37%HCl 1% to 10%, and isopropanol 10% to 40%.

We find that acetone, mesityl oxide, cyclohexanone, or isophorone may be substituted for the acetophenone on a mole-for-mole basis; generally any monofunctional ketone having 3-9 carbon atoms may be used.

Urea, 1-3-dibutyl-2-thiourea, and/or other alkyl-substituted thioureas may be substituted mole-for-mole for the thiourea, and benzaldehyde may be substituted for the formaldehyde, also mole for mole. Each of the constituents may vary in concentration more or less in line with the ranges presented above for the preferred ingredients.

While NEODOL 91.8 is preferred, we may use ethoxylated alcohols having from 8 to 12 carbon atoms in place thereof.

Instead of cinnamaldehyde in the preferred composition listed above, we may use p-hydroxycinnamaldehyde, p-mechylcinnamaldehyde, p-ethylcinnamaldehyde, p-methoxycinnamaldehyde, p-dimethylaminocinnamaldehyde, p-diethylaminocinnamaldehyde, p-nitrocinnamaldehyde, o-nitrocinnamaldehyde, o-allyloxycinnamaldehyde, 4-(3-propenal)cinnamaldehyde, p-sodium sulfocinnamaldehyde, p-trimethylammoniumcinnamaldehyde sulfate, p-thiocyano-cinnamaldehyde, p-(S-acetyl)thiocinnamaldehyde, p-(S-N,N)-dimethylcarbamoylthio)cinnamaldehyde, α-methylcinnamaldehyde. β-methylcinnamaldehyde, α-butylcinnamaldehyde, α-amylcinnamaldehyde, α-hexylcinnamaldehyde, α-ethyl-p-methylcinnamaldehyde, p-methyl-α-pentylcinnamaldehyde, and other such derivatives of cinnamaldehyde, which may be referred to herein as substituted cinnamaldehydes.

Corrosion tests were run using the following procedure:
1. Pour 100 ml of the test acid into an 237 ml (8 ounce) glass or Teflon jar, add the desired amount or corrosion inhibitor composition and any other additives to be included and stir. In each case reported in Table I, the test acid used was 15% HCl.
2. Place a precleaned and weighed coupon into the jar with the concave side down; place the jar with the lid screwed on loosely in a water bath preheated to the desired temperature. At temperatures above 93°C (200°F) the corrosion tests are run in a Chandler Autoclave at pressures of 24.1-27.6 MPa (3500-4000psi).
3. Leave the coupon in the jar in the heated bath for the desired period of time, remove and rinse off the solution.
4. Air dry the coupon; brush clean with a wire brush to remove corrosion products.
5. Reweigh coupon to nearest 0.001 gram. Report corrosion as weight loss in kg/m² (pounds per square foot).

For each run reported in Table I, three (3) coupons were used; their corrosion amounts were reported as averages. The inhibitor composition used was the above listed Preferred Composition of specific percentages, i.e. 15% cinnamaldehyde, 15% Neodol 91.8, etc.

**Table I**

| Hours | °C (°F) | Formic Acid | Inhib Conc.,% | Av Corrosion* |
|---|---|---|---|---|
| 24 | 66 (150) | none | 0.1 | 0.066 (0.0135) |
| 24 | 66 (150) | none | 0.2 | 0.048 (0.0099) |
| 24 | 79 (175) | none | 0.2 | 0.083 (0.017) |
| 24 | 79 (175) | none | 0.4 | 0.061 (0.0124) |
| 16 | 93 (200) | none | 0.4 | 0.079 (0.0162) |
| 16 | 93 (200) | none | 0.6 | 0.073 (0.015) |
| 6 | 121 (250) | 4% | 0.4 | 0.077 (0.0158) |
| 6 | 121 (250) | 4% | 0.6 | 0.082 (0.0167) |
| 6 | 121 (250) | 4% | 0.8 | 0.079 (0.0162) |
| 6 | 121 (250) | 4% | 0.8 | 0.090 (0.0185) |
| 6 | 135 (275) | 4% | 0.6 | 0.080 (0.0163) |
| 6 | 135 (275) | 4% | 0.8 | 0.077 (0.0158) |
| 6 | 149 (300) | 6% | 1.0 | 0.086 (0.0176) |

| | | | | |
|---|---|---|---|---|
| * in Kg/m² (pounds per square foot) | | | | |

It is seen from the above that our corrosion inhibitor is effective at temperatures of 149°C (300°F) or higher. The formic acid is an optional corrosion inhibiting enhancer.

Table II reports the results of similar tests preformed on N-80 Steel:

**Table II**

| Acid Type | Temp °C (°F) | Time (Hrs.) | Conc (gpt) | Formic Acid (gpt) | Corr. Rate Kg/m² (Pounds /ft²) |
|---|---|---|---|---|---|
| 15% HCl | 66 (150) | 24 | 1.0 | 0 | 0.066 (0.0135) |
| 15% HCl | 79 (175) | 24 | 2.0 | 0 | 0.083 (0.0170) |
| 15% HCl | 93 (200) | 16 | 4.0 | 0 | 0.079 (0.0162) |
| 15% HCl | 121 (250) | 6 | 4.0 | 40 | 0.077 (0.0158) |
| 15% HCl | 135 (275) | 6 | 6.0 | 40 | 0.080 (0.0163) |
| 15% HCl | 149 (300) | 6 | 10.0 | 60 | 0.086 (0.0176) |
| | | | | | |
| 28% HCl | 66 (150) | 24 | 4.0 | 0 | 0.045 (0.0093) |
| 28% HCl | 79 (175) | 16 | 6.0 | 0 | 0.140 (0.0287) |
| 28% HCl | 93 (200) | 16 | 20.0 | 0 | 0.083 (0.0169) |
| 28% HCl | 107 (225) | 6 | 10.0 | 60 | 0.045 (0.0092) |
| 28% HCl | 121 (250) | 6 | 10.0 | 20 | 0.062 (0.0126) |
| 28% HCl | 135 (275) | 6 | 10.0 | 60 | 0.057 (0.0117) |
| 28% HCl | 149 (300) | 6 | 10.0 | 60 | 0.117 (0.0239) |
| | | | | | |
| 12/3 Mud | 66 (150) | 24 | 2.0 | 0 | 0.040 (0.0082) |
| 12/3 Mud | 79 (175) | 24 | 1.0 | 0 | 0.194 (0.0398) |
| 12/3 Mud | 93 (200) | 16 | 6.0 | 0 | 0.135 (0.0277) |
| 12/3 Mud | 107 (225) | 6 | 6.0 | 0 | 0.082 (0.0167) |
| 12/3 Mud | 121 (250) | 6 | 8.0 | 20 | 0.097 (0.0193) |
| 12/3 Mud | 135 (275) | 6 | 10.0 | 40 | 0.084 (0.0173) |
| (gpt: gallons per thousand gallons (corresponding to liters per thonsond liters)) | | | | | |

Table III reports similar experiments with Chrome - 13 Steel:

**Table III**

| Acid Type | Temp °C (°F) | Time (Hrs.) | Conc (gpt) | Formic Acid (gpt) | Corr. Rate Kg/m² (pounds /ft²) |
|---|---|---|---|---|---|
| 15% HCl | 38 (100) | 24 | 2.0 | 0 | 0.058 (0.0119) |
| 15% HCl | 52 (125) | 24 | 2.0 | 0 | 0.055 (0.0113) |
| 15% HCl | 66 (150) | 24 | 4.0 | 0 | 0.085 (0.0174) |
| 15% HCl | 79 (175) | 24 | 4.0 | 0 | 0.071 (0.0146) |
| 15% HCl | 93 (200) | 16 | 10.0 | 0 | 0.151 (0.031) |
| 15% HCl | 107 (225) | 6 | 10.0 | 20 | |
| 15% HCl | 121 (250) | 6 | 6.0 | 20 | 0.143 (0.0292) |
| 15% HCl | 135 (275) | 6 | 16.0 | 40 | 0.155 (0.0317) |
| 15% HCl | 149 (300) | 6 | 20.0 | 60 | 0.142 (0.0291) |
| | | | | | |
| 28% HCl | 38 (100) | 24 | 4.0 | 0 | 0.050 (0.0103) |
| 28% HCl | 52 (125) | 24 | 4.0 | 0 | 0.111 (0.0227) |
| 28% HCl | 66 (150) | 24 | 8.0 | 0 | 0.077 (0.0156) |
| 28% HCl | 79 (175) | 16 | 8.0 | 0 | 0.061 (0.0125) |
| 28% HCl | 93 (200) | 16 | | | |
| 28% HCl | 107 (225) | 6 | 10.0 | 80 | 0.072 (0.0148) |
| 28% HCl | 121 (250) | 6 | 25.0 | 60 | 0.135 (0.0277) |
| | | | | | |
| 12/3 Mud | 38 (100) | 24 | 2.0 | 0 | 0.052 (0.0107) |
| 12/3 Mud | 52 (125) | 24 | 2.0 | 0 | 0.057 (0.0117) |
| 12/3 Mud | 66 (150) | 24 | 4.0 | 0 | 0.085 (0.0175) |
| 12/3 Mud | 79 (175) | 24 | 6.0 | 0 | 0.086 (0.0176) |
| 12/3 Mud | 93 (200) | 16 | 6.0 | 0 | 0.135 (0.0277) |

Results of similar experiments using Chrome 2205 are reported in Table IV:

**Table IV**

| Acid Type | Temp °C (°F) | Time (Hrs.) | Conc (gpt) | Formic Acid (ggt) | Corr. Rate Kg/m² (pounds /ft²) |
|---|---|---|---|---|---|
| 15% HCl | 52 (125) | 16 | 4.0 | 0 | 0.086 (0.014) |
| 15% HCl | 52 (125) | 6 | 4.0 | 0 | 0.039 (0.0079) |
| 15% HCl | 66 (150) | 6 | 8.0 | 0 | 0.115 (0.0235) |
| | | | | | |
| 28% HCl | 38 (100) | 24 | 2.0 | 0 | 0.041 (0.0084) |
| 28% HCl | 52 (125) | 24 | 6.0 | 0 | 0.029 (0.0059) |
| 28% HCl | 66 (150) | 6 | 8.0 | 0 | 0.031 (0.0064) |
| 28% HCl | 79 (175) | 6 | 14.0 | 0 | 0.040 (0.0082) |
| | | | | | |
| 12/3 Mud | 52 (125) | 6 | 8.0 | 0 | 0.062 (0.0127) |
| 12/3 Mud | 66 (150) | 6 | 10.0 | 0 | 1.561 (0.3197) |

Generally our-composition will be effective in inhibiting corrosion in almost any concentration -- that is, if a very small amount is used, it will be effective to a small degree. However, we prefer to use 0.1% to 1.0% based on the hydrochloric acid solution, but as much as 5% may be used.

## Claims

1. A composition useful for inhibiting corrosion of ferrous metals by acidic solutions comprising, by weight, (a) 10% to 30% cinnamaldehyde or substituted cinnamaldehyde, (b) 20% to 50% ethylene glycol, (c) 5% to 20% C₈₋₁₂ ethoxylated alcohols, and (d) 1% to 15% of a composition comprising 10% to 40% isopropanol and a reaction product, based on the total composition in this section (d), of 10% to 40% of a ketone having 3 to 9 carbon atoms, 1% to 10% urea, thiourea or an alkyl-substituted thiourea, 25% to 50% benzaldehyde or formaldehyde calculated as a 37% solution, and 1% to 10% HCl calculated as a 37% solution, said reaction being conducted in the presence of 5% to 20% ethylene glycol, propylene glycol or butanol and by warming the reactants in a vessel equipped with a reflux condenser, at a temperature slightly below that at which formaldehyde or benzaldehyde would collect in the condenser, and then refluxing the reaction mixture for at least six hours,
with the proviso that the composition does not contain quaternary amines, acetylenic alcohols, formaldehyde and phenol ethoxylate surfactants.

2. The composition of claim 1, wherein the reaction product of component (d) is a reaction product of 10% to 40% acetophenone, 1% to 10% thiourea, 25% to 50% formaldehyde calculated as a 37% solution, 1% to 10% HCl calculated as a 37% solution, and 10% to 40% isopropanol, based on the total composition of component (d).

3. The composition of claim 1 including, based on the overall composition, additional 1% to 5% isopropanol.

4. The composition of claim 1 including up to 50% formic acid.

5. The composition of claim 1, wherein said ketone is acetophenone.

6. The composition of claim 1, wherein said ketone is acetone.

7. The composition of claim 1, wherein said ketone is mesityl oxide.

8. The composition of claim 1, wherein said ketone is isophorone.

9. The composition of claim 1, wherein said ketone is cyclohexanone.

10. A composition useful for acidizing wells comprising hydrochloric acid and 0.1% to 5% by weight of the composition of claim 1.

11. The composition of claim 10, wherein said composition of claim 1 is present in an amount of from 0.1% to 1.0% of the overall composition.

12. A method of acidizing a well comprising treating said well with a composition of claim 10.

## Patentansprüche

1. Zusammensetzung, verwendbar zum Inhibieren von Korrosion von Eisen(II)-Metallen durch saure Lösungen, aufweisend in Gew.%: (a) 10 bis 30% Zimtaldehyd oder substituiertes Zimtaldehyd, (b) 20 bis 50% Ethylenglykol, (c) 5 bis 20% C₈₋₁₂-ethoxylierte Alkohole und (d) 1 bis 15% einer Zusammensetzung, die 10 bis 40% Isopropanol aufweist und ein Reaktionsprodukt, bezogen auf die Gesamtzusammensetzung dieses Abschnittes (d), 10 bis 40% eines Ketons mit 3 bis 9 Kohlenstoffatomen, 1 bis 10% Harnstoff, Thioharnstoff oder einen Alkyl-substituierten Thioharnstoff, 25 bis 50% Benzaldehyd oder Formaldehyd, berechnet als eine 37%ige Lösung, und 1 bis 10% HCl, berechnet als eine 37%ige Lösung, wobei die Reaktion in Gegenwart von 5 bis 20% Ethylenglykol, Propylenglykol oder Butanol und durch Erwärmen der Reaktanten in einem Gefäß ausgerührt wird, das mit einem Rückflusskühler ausgestattet ist, und zwar bei einer Temperatur geringfügig unterhalb derjenigen, bei der sich Formaldehyd oder Benzaldehyd im Kühler ansammeln würden und anschließend Refluxieren des Reaktionsgemisches für mindestens 6 Stunden
unter der Voraussetzung, dass die Zusammensetzung keine quaternären Amine, acetylenischen Alkohole, Formaldehyd- und Phenolethoxylat-Tenside enthält.

2. Zusammensetzung nach Anspruch 1, bei welcher das Reaktionsprodukt von Komponente (d) ein Reaktionsprodukt von 10 bis 40% Acetophenon, 1 bis 10% Thiohamstoff, 25 bis 50% Formaldehyd, berechnet als eine 37%ige Lösung, 1 bis 10%HCl, berechnet als eine 37%ige Lösung, und 10 bis 40% Isopropanol bezogen auf die Gesamtzusammensetzung der Komponente (d) ist.

3. Zusammensetzung nach Anspruch 1, einschließend bezogen auf die Gesamtzusammensetzung zusätzlich 1 bis 5% Isopropanol.

4. Zusammensetzung nach Anspruch 1, einschließend bis zu 50% Ameisensäure.

5. Zusammensetzung nach Anspruch 1, bei welcher das Keton Acetophenon ist.

6. Zusammensetzung nach Anspruch 1, bei welcher das Keton Aceton ist.

7. Zusammensetzung nach Anspruch 1, bei welcher das Keton Mesityloxid ist.

8. Zusammensetzung nach Anspruch 1, bei welcher das Keton Isophoron ist.

9. Zusammensetzung nach Anspruch 1, bei welcher das Keton Cyclohexanon ist.

10. Zusammensetzung, verwendbar zum Ansäuern von Bohrungen, aufweisend Salzsäure und 0,1% bis 5 Gew.% der Zusammensetzung nach Anspruch 1.

11. Zusammensetzung nach Anspruch 10, bei welcher die Zusammensetzung nach Anspruch 1 in einer Menge von 0,1% bis 1,0% der Gesamtzusammensetzung vorhanden ist.

12. Verfahren zum Ansäuern einer Bohrung, umfassend das Behandeln der Bohrung mit einer Zusammensetzung nach Anspruch 10.

## Revendications

1. Composition utile pour inhiber la corrosion de métaux ferreux par des solutions acides, comprenant, en poids, (a) 10% à 30% de cinnamaldéhyde ou cinnamaldéhyde substitué, (b) 20% à 50% d'éthylèneglycol, (c) 5% à 20% d'alcools éthoxylés en C₈ à C₁₂ et (d) 1% à 15% d'une composition comprenant 10% à 40% d'isopropanol et un produit de réaction, sur la base de la composition totale dans cette section (d), de 10% à 40% d'une cétone ayant 3 à 9 atomes de carbone, de 1% à 10% d'urée, de thio-urée ou d'une thio-urée alkylée, de 25% à 50% de benzaldéhyde ou de formaldéhyde calculé sous la forme d'une solution à 37%, et de 1% à 10% de HCl calculé sous la forme d'une solution à 37%, ladite réaction étant effectuée en présence de 5% à 20% d'éthylèneglycol, de propylèneglycol ou de butanol et en chauffant les réactants dans un récipient équipé d'un condenseur à reflux, à une température légèrement inférieure à celle à laquelle le formaldéhyde ou le benzaldéhyde se recueilleraient dans le condenseur, puis en chauffant le mélange réactionnel à reflux pendant au moins six heures,
avec la condition que la composition ne contienne pas d'amines quaternaires, d'alcools acétyléniques, de formaldéhyde et d'agents tensioactifs éthoxylates de phénol.

2. Composition selon la revendication 1, dans laquelle le produit de réaction du constituant (d) est un produit de réaction de 10% à 40% d'acétophénone, de 1% à 10% de thio-urée, de 25% à 50% de formaldéhyde calculé sous la forme d'une solution à 37%, de 1% à 10% de HCl calculé sous la forme d'une solution à 37%, et de 10% à 40% d'isopropanol, sur la base de la composition totale du constituant (d).

3. Composition selon la revendication 1, incluant, sur la base de la composition globale, 1% à 5% d'isopropanol supplémentaire.

4. Composition selon la revendication 1, incluant jusqu'à 50% d'acide formique.

5. Composition selon la revendication 1, dans laquelle ladite cétone est l'acétophénone.

6. Composition selon la revendication 1, dans laquelle ladite cétone est l'acétone.

7. Composition selon la revendication 1, dans laquelle ladite cétone est l'oxyde de mésityle.

8. Composition selon la revendication 1, dans laquelle ladite cétone est l'isophorone.

9. Composition selon la revendication 1, dans laquelle ladite cétone est la cyclohexanone.

10. Composition utile pour acidifier des puits, comprenant de l'acide chlorhydrique et 0,1% à 5% en poids de la composition selon la revendication 1.

11. Composition selon la revendication 10, dans laquelle ladite composition de la revendication 1 est présente en une proportion de 0,1% à 1,0% de la composition globale.

12. Procédé d'acidification d'un puits, comprenant le traitement dudit puits avec une composition selon la revendication 10.
